Europäisches Patentamt

European Patent Office

Office européen des brevets

(11) Veröffentlichungsnummer: **0 192 955**
**B1**

(12) ## EUROPÄISCHE PATENTSCHRIFT

(45) Veröffentlichungstag der Patentschrift:
31.05.89

(51) Int. Cl.⁴: **H01B 7/28**

(21) Anmeldenummer: **86100749.0**

(22) Anmeldetag: **21.01.86**

(54) Elektrische Isolierungen.

(30) Priorität: **06.02.85 DE 3503998**

(43) Veröffentlichungstag der Anmeldung:
**03.09.86 Patentblatt 86/36**

(45) Bekanntmachung des Hinweises auf die Patenterteilung:
**31.05.89 Patentblatt 89/22**

(84) Benannte Vertragsstaaten:
**BE CH DE FR LI**

(56) Entgegenhaltungen:
**JOURNAL OF FIRE RETARDANT CHEMISTRY, Band 7, Nr. I, February 1980, Technomic Publishing Co., Inc., Connecticut, US; P.A. CUSACK et al.: "An investigation of metal stannates as smoke suppressants in glass-reinforced polyester"**

(73) Patentinhaber: **Siemens Aktiengesellschaft Berlin und München, Wittelsbacherplatz 2, D-8000 München 2(DE)**

(72) Erfinder: **Henkel, Hans-Joachim, Dr., Philipp-Reis-Strasse 34, D-8520 Erlangen(DE)**
Erfinder: **Müller, Norbert, Dr., Von-Hauck-Strasse 15b, D-8522 Herzogenaurach(DE)**

**Beschreibung**

Die Erfindung betrifft elektrische Isolierungen auf Polyolefinbasis, insbesondere bei Kabeln und Leitungen, für Mittel- und Hochspannung ab zirka 10 kV mit einem Zusatz zum Retardieren von Wasserbäumchen.

In elektrisch beanspruchten Polyolefinisolierungen können Vorgänge ablaufen, die als "electrochemical treeing" (ECT) oder "water treeing" bezeichnet werden. Diese Vorgänge, die insbesondere im Hinblick auf die Betriebssicherheit kunststoffisolierter Mittel- und Hochspannungskabel von Bedeutung sind, führen zur Entstehung von bäumchenartigen Gebilden, den sogenannten ECT-Strukturen.

Das optische Erscheinungsbild von ECT-Strukturen, die nach geeigneter Anfärbung besonders kontrastreich und detailliert sichtbar sind, ist sehr vielfältig. Grundsätzlich unterscheidet man zwischen zwei Formen:
- "vented trees", die von der Oberfläche der Isolierung ausgehen und sich in die Isolierung hinein erstrecken, und
- "bow-tie trees", die im Inneren der Isolierung entstehen.

Der Mechanismus der ECT-Bildung ist bislang nicht geklärt. Allgemein wird aber angenommen, daß für die Bildung der ECT-Strukturen ein elektrisches Feld und die Anwesenheit einer polaren Flüssigkeit, insbesondere von Wasser, erforderlich ist; die ECT-Strukturen werden deshalb auch als Wasserbäumchen bezeichnet. Die Initiierungsorte der Wasserbäumchen scheinen immer Störstellen zu sein, wie Verunreinigungen, aggregierte Beimischungen, Hohlräume, Spalte, Risse oder Grenzflächen, von denen jedoch jeweils nur ein Teil zur Bildung von Wasserbäumchen führt. Von den Störstellen aus, die bei im großtechnischen Maßstab hergestellten Isolierungen nicht vollständig vermieden werden können, erstrecken sich die bäumchenartigen Strukturen in Richtung des elektrischen Feldes.

Da ECT-Strukturen lokale Veränderungen des Isoliermaterials darstellen, können sie eine Schädigung der Isolierung bewirken, insbesondere im Hinblick auf die elektrische Durchschlagsfestigkeit. Es sind deshalb bereits zahlreiche Versuche unternommen worden, um das Wachstum von Wasserbäumchen zu verhindern oder zumindest zu verzögern.

Eine der Maßnahmen zur Verhinderung der Bildung von Wasserbäumchen besteht darin, die Isolierschicht mit einer metallischen Umhüllung bzw. Ummantelung, beispielsweise aus Blei oder Aluminium, zu versehen. Kabel mit einer derartigen Wasserabschirmschicht sind aber nicht nur kostspieliger, sondern auch schwerer und deshalb auch schwieriger handzuhaben als Kabel ohne eine Metallhülle.

Aus diesem Grunde ist deshalb bereits versucht worden, die Bildung von ECT-Strukturen durch die Zugabe von Additiven zur Isolierschicht (oder angrenzenden Schichten) zu unterbinden. Aus der Vielzahl der dabei eingesetzten Verbindungen seien beispielhaft genannt: Bleistearat (DE-OS 2 425 760 bzw. GB-PS 1 437 867), Natriumchlorid und -sulfat oder andere starke Elektrolyte (DE-AS 2 537 283 bzw. US-PS 4 042 776), stabile Hydrate bildende Salze, wie Calcium- und Magnesiumchlorid, und basische Anhydride (DE-OS 2 817 804 bzw. GB-PS 1 584 501), Silicagel und Phosphorpentoxid (DE-OS 2 754 336), Organosilane (US-PS 4 144 202, US-PS 4 212 756 und US-PS 4 263 158 sowie DE-PO 2 805 875), Bleioxide und basische Bleiverbindungen (DE-OS 2 523 844 und DE-OS 2 806 752), organische Isocyanate (US-PS 4 282 333), auf das Polymermaterial aufgepfropfte Silanverbindungen (DE-OS 2 935 224) und Metallkomplexe von Diketonen, Salicylsäure oder Schiffschen Basen (EP-AI 0 027 300).

Andererseits und konträr zu den Vorschlägen, salzartige Verbindungen bzw. Elektrolyte zuzusetzen, ist aber auch schon vorgeschlagen worden, den Gehalt der Isolierung an darin fein verteilten wasserlöslichen und/oder hygroskopischen Salzen unter einem Wert von $10^{-1}$ ppm und vorzugsweise unter $10^{-4}$ ppm zu halten (DE-OS 2 911 756).

Offensichtlich haben aber all diese Maßnahmen, die sich darüber hinaus zum Teil auch widersprechen, noch nicht den erwünschten Erfolg gebracht. Denn so findet sich in einem Bericht über die Cigre, d.h. die Internationale Hochspannungskonferenz, von 1980 der Hinweis (siehe: "Kunststoffe" 71, 1981, Seite 448 ff.), daß empfohlen wurde, bei (Hochspannungs-)Kabeln einen wasserdichten Metallschirm aufzubringen, um das Eindringen von Feuchtigkeit zu verhindern.

Aufgabe der Erfindung ist es, bei elektrischen Isolierungen der eingangs genannten Art, d.h. bei Isolierungen auf der Basis von vernetzten oder unvernetzten Polyolefinen, das Wachstum von Wasserbäumchen durch geeignete Zusätze wirksam und dauerhaft zu unterdrücken bzw. deren Bildung so weit wie möglich zu verhindern, so daß auf aufwendige Maßnahmen, wie Metallmäntel, verzichtet werden kann.

Dies wird erfindungsgemäß dadurch erreicht, daß die elektrischen Isolierungen als Zusatz wenigstens eine der folgenden Verbindungen enthalten: Kaliumstannat, Natriumstannat und Titanoxidsulfat.

In den erfindungsgemäßen Isolierungen dienen somit als ECT-retardierende Zusätze Alkalistannate bzw. ein basisches Titansulfat. Alkalistannate sind in chemischer Hinsicht Verbindungen der Formel $Me_2[Sn(OH)_6]$ (im vorliegenden Fall mit Me = K oder Na), d.h. sogenannte Hexahydroxostannate. Titanoxidsulfat, das auch als Titanylsulfat bezeichnet wird, hat die Formel $TiO(SO_4)$. Diesen ECT-retardierenden Zusätzen ist gemein, daß ihnen jeweils ein Metall der 4. Gruppe des Periodensystems der Elemente zugrunde liegt, nämlich Zinn (Sn) bzw. Titan (Ti).

Mittels der erfindungsgemäßen Zusätze kann einerseits die ECT-Bildung in elektrischen Isoliermaterialien unterdrückt werden, andererseits wird durch diese Verbindungen das Angebot an wirksamen Zusätzen erweitert. Dieses Angebot besteht bislang in Barbitursäure bzw. 2-Thiobarbitursäure und Derivaten davon (DE-OS 3 202 828 bzw. US-PS 4 458 044), in wasserlöslichen Alkali- oder Erdalkaliphosphaten und hydrolysierbaren Phosphorsäureestern (DE-OS 3 202 896), in Stoffen mit einer bestimmten Partikelgröße, welche für Schwermetallionen adsorptionsaktiv sind oder Schwermetalle im Ionenaustausch binden, wie pyrogene und/oder gefällte Kieselsäuren sowie Aluminiumoxide bzw. -oxidhydrate und Aluminiumsilicate (DE-OS 3 318 988), sowie in Alkoholaten von Magnesium, Calcium und Aluminium (DE-OS 3 321 268).

Die Verwendung spezieller Titanverbindungen bei der Unterbindung der ECT-Bildung ist an sich bereits bekannt. In der EP-A2 0 057 286 ist nämlich eine Zusammensetzung beschrieben, die keinen zugesetzten mineralischen Füllstoff aufweist und die ein Ethylenpolymeres und ein Organotitanat, d.h. Ti(OR)$_4$, in einer Menge enthält, die ausreicht, um die ECT-Resistenz zu verbessern. Organische Titanverbindungen sind aber mit Titanoxidsulfat, einer anorganischen Titanverbindung, nicht vergleichbar. Darüber hinaus sind die Organotitanate lediglich eine Art Depotform für den ECT-Inhibitor Alkohol. Sie hydrolysieren nämlich und liefern dabei Alkohole (ROH), die dann als Inhibitor bei der Bildung von Wasserbäumchen fungieren.

Außer in Kabeln und Leitungen können die erfindungsgemäßen elektrischen Isolierungen auch in Muffen und in Garnituren Verwendung finden. Als Grundlage dienen bei diesen Isoliermaterialien Polyolefine, und zwar vernetzte oder unvernetzte Materialien. Insbesondere finden in den erfindungsgemäßen Isolierungen Polyethylen (PE) und vernetztes Polyethylen (VPE) Verwendung. Daneben können aber auch Ethylen-Copolymere, wie Ethylen-Propylen-Copolymere (EPR), Ethylen-Vinylacetat-Copolymere (EVA) und Ethylen-Alkylacrylat-Copolymere (beispielsweise Ethylen-Ethylacrylat- und -Butylacrylat-Copolymere), bzw. Ethylen-Propylen-Dien-Terpolymere und Gemische (Blends) dieser Ethylen-Copolymere und -Terpolymere mit Polyolefinen, insbesondere Polyethylen und Polypropylen, eingesetzt werden. Die genannten Polymeren bzw. Polymergemische können, wie bereits erwähnt, sowohl vernetzt als auch unvernetzt zum Einsatz kommen. Die Vernetzung erfolgt dabei vorzugsweise peroxidisch oder durch energiereiche Strahlen. Die Isoliermaterialien können gegebenenfalls auch mit Oxidationsstabilisatoren versehen sein.

Der Anteil der Zusätze beträgt etwa zwischen 0,1 und 5 Gew.-%, bezogen auf das Gesamtgewicht der elektrischen Isolierung. Die Zusätze werden dem Isoliermaterial zugegeben. Bei Kabeln und Leitungen können die Zusätze der eigentlichen Isolierschicht als auch den feldbegrenzenden Schichten, d.h. der inneren und/oder äußeren Leitschicht, zugesetzt werden. Die Zusätze können dabei in einer Schicht oder in sämtlichen Schichten vorhanden sein. Vorzugsweise beträgt der Anteil der Zusätze etwa 0,5 bis 3 Gew.-%.

Anhand von Ausführungsbeispielen soll die Erfindung noch näher erläutert werden.

Zum Nachweis der Verminderung der Bildung von Wasserbäumchen wurden aus hochreinem, unstabilisiertem thermoplastischem Polyethylen niederer Dichte (LDPE) 3 mm dicke Platten – mit und ohne Zusatz – hergestellt. Zur Herstellung von erfindungsgemäßen Isolierungen wurden dabei in einen Teil des Plattenmaterials vor dem Verpressen die ECT-retardierenden Zusätze in verschiedenen Konzentrationen homogen eingemischt. Die plattenförmigen Prüflinge wurden dann mit 10 kV/50 Hz elektrisch belastet, wobei sich beide Oberflächen in direktem Kontakt mit einer auf 70°C erwärmten 3%igen Natriumchloridlösung befanden. Die Belastungsdauer betrug 130 Stunden.

Die Versuchsergebnisse zeigen, daß die ECT-retardierende Zusätze enthaltenden Plattenprüflinge – unter gleichen Versuchsbedingungen – im Vergleich zu den Prüflingen ohne derartige Zusätze weniger ECT-Strukturen enthalten. Es ergibt sich ferner auch ein beachtlicher Unterschied in der Größe der ECT-Strukturen. Während nämlich die Längenausdehnung der ECT-Strukturen in Richtung des elektrischen Feldes in den Prüflingen ohne Zusätze bis zu 1500 µm beträgt, weisen die Zusätze enthaltenden Prüflinge ECT-Strukturen unterhalb 50 µm auf.

Im einzelnen ergibt sich – bei Zusätzen von 0,5 bis 2% – beispielsweise folgendes:

| Zusatz | Länge der ECT-Strukturen | Relative Anzahl der ECT-Strukturen (bezogen auf Vergleichsversuch) |
|---|---|---|
| Vergleichsversuch | ≤1500 µm | – |
| Na$_2$[Sn(OH)$_6$] | <50 µm | geringer |
| TiO(SO$_4$) | <50 µm | geringer |

Es zeigt sich somit, daß die ECT-Bildung bereits bei geringen Konzentrationen an retardierenden Zusätzen beträchtlich reduziert werden kann. Dies hat den weiteren Vorteil, daß die elektrischen Eigenschaften der Isolierungen nicht oder nur unwesentlich beeinflußt werden.

**Patentansprüche**

1. Elektrische Isolierungen auf Polyolefinbasis, insbesondere bei Kabeln und Leitungen, für Mittel- und Hochspannung ab zirka 10 kV mit einem Zusatz zum Retardieren von Wasserbäumchen, dadurch gekennzeichnet, daß sie als Zusatz wenigstens eine der folgenden Verbindungen enthalten: Kaliumstannat, Natriumstannat, und Titanoxidsulfat.

2. Elektrische Isolierungen nach Anspruch 1, dadurch gekennzeichnet, daß der Anteil des Zusatzes 0,1 bis 5 Gew.-%, insbesondere 0,5 bis 3 Gew.-%, beträgt, bezogen auf das Gesamtgewicht.

**Claims**

1. Polyolefin-based electrical insulation, in particular for cables and conductors, for middle and high voltage from about 10 kV, with an additive for retarding water-treeing, characterised in that as an additive it contains at least one of the following compounds: potassium stannate, sodium stannate and titanium oxide sulphate.

2. Electrical insulation according to claim 1, characterised in that the amount of additive is 0.1 to 5% by weight, in particular 0.5 to 3% by weight, based on the total weight.

**Revendications**

1. Isolants électriques à base de polyoléfines, notamment pour des câbles et des lignes, pour une moyenne tension et une haute tension à partir d'environ 10 kV, et comportant un additif servant à retarder la formation d'arborescences d'eau, caractérisés par le fait qu'ils contiennent, comme additif, au moins l'un des composés suivants: stannate de potassium, stannate de soidum et sulfate de titanyle.

2. Isolants électriques suivant la revendication 1, caractérisé par le fait que le pourcentage d'additif est compris entre 0,1 et 5% en poids, notamment entre 0,5 et 3% en poids, rapportés au poids total.